# EUROPÄISCHE PATENTSCHRIFT

(11) **EP 1 996 901 B1**
(45) Veröffentlichungstag und Bekanntmachung des Hinweises auf die Patenterteilung: **14.09.2011**
(21) Anmeldenummer: 07701331.6
(22) Anmeldetag: 19.02.2007
(51) Int. Cl.: G01F 1/64, G01F 1/86, G01P 5/08

(54) **VORRICHTUNG FÜR DIE MESSUNG DER GESCHWINDIGKEIT EINES FLUIDSTROMES**
APPARATUS FOR MEASURING THE VELOCITY OF A FLUID FLOW
DISPOSITIF POUR LA MESURE DE LA VITESSE D'UN COURANT DE FLUIDE

(30) Priorität: 20.02.2006 AT 2632006
(43) Veröffentlichungstag der Anmeldung: 03.12.2008
(73) Patentinhaber: GUNYTRONIC gasflow sensoric systems GmbH, 4300 St. Valentin (AT)
(72) Erfinder: WEILGUNY, Günter, A-4950 Altheim (AT); WASNER, Wolfgang, A-4910 Ried im Innkreis (AT); NADERHIRN, Michael, A-4040 Linz (AT)
(74) Vertreter: Bickel, Michael
(86) Internationale Anmeldenummer: PCT/AT2007/000088
(87) Internationale Veröffentlichungsnummer: WO 2007/095654

(56) Entgegenhaltungen:
- DE-A1- 2 819 506
- SU-A1- 1 553 831
- US-A- 2 619 836
- US-A- 4 480 484
- US-A- 5 247 836
- MALACZYNSKI G W ET AL: "AN ION-DRAG AIR MASS-FLOW SENSOR FOR AUTOMOTIVE APPLICATIONS" IEEE TRANSACTIONS ON INDUSTRY APPLICATIONS, IEEE SERVICE CENTER, PISCATAWAY, NJ, US, Bd. 28, Nr. 2, März 1992 (1992-03), Seiten 304-309, XP000291654 ISSN: 0093-9994

## Beschreibung

Die Erfindung betrifft eine Vorrichtung zur Messung von Fluidströmungen. Besonders vorteilhaft ist sie für die Messung von Gasströmungen anwendbar.

Die US 4152935 (Nissan) beschreibt ein Gerät zur Messung des Massenflusses eines Fluids durch eine Röhre aus einem elektrisch nicht leitenden Material. Mit Hilfe eines Elektrodenpaares wird ein ionisierendes elektrisches Feld in das Fluid eingebracht. Die erste Elektrode dieses Paares ist eine in die Mitte des Fluidstromes ragende Spitze; sie wird mit Hochspannungsimpulsen beaufschlagt. Die zweite Elektrode dieses Paares ist geerdet. Sie liegt bezüglich des Fluidstromes auf gleicher Höhe wie die erste Elektrode, aber in einem Abstand zu dieser flächenbündig an der begrenzenden Wand des Fluidstromes. Ein Stück flussabwärts ist der Fluidstrom durch eine dritte, ebenfalls geerdete Elektrode umfasst. Noch ein Stück weiter flussabwärts erstreckt sich zusätzlich eine Gitterelektrode über den Querschnitt des Fluidstromes. Es wird die Zeit gemessen, die vergeht, bis die durch einen Hochspannungsimpuls an der ionisierenden Elektrode verursachte Ionenwolke durch den Fluidstrom bis zu der Gitterelektrode abgetrieben wird, und dort eine Potentialveränderung gegen Masse hervorruft. Die zwischen Hochspannungs- und Gitterelektrode angebrachte, den Fluidstrom umfassende geerdete Elektrode dient dazu, störende unerwünschte Auf- und Entladungen zu vermeiden. Wichtige Nachteile bei dieser Bauweise sind, das Erfordernis einer elektrisch isolierenden und damit nichtmetallischen Röhre, dass die Messzeit bei langsamen Strömungen sehr lang wird, dass entgegengesetzt gerichtete Strömungen nur durch annähernde Verdoppelung des ohnedies schon erheblichen Kosteneinsatzes messbar werden, dass pulsierende Strömungen bei denen die Amplitude der Bewegung kleiner ist als die Messstrecke gar nicht gemessen werden können, und das keine Aussagen über die Turbulenz der Strömung gemacht werden können.

In der US 4,953,407. (General Motors) wird eine ebenfalls auf dem Prinzip des lonentransports beruhende Vorrichtung zur Messung der Gasströmung im gemeinsamen Luftzuführungsrohr für einen Verbrennungsmotor vorgeschlagen. Um störende Einflüsse durch Anlagerung von polaren Molekülen (H₂0) an Ionen zu vermeiden, wird das umgebende elektrische Feld so niedrig gehalten, dass die thermische Trennwirkung das Anlagern wieder ausgleicht. Es werden zwei bezüglich einer Querschnittsebene des Fluidstromes spiegelsymmetrisch aufgebaute Anordnungen aus einer spitzen, Korona hervorrufenden Hochspannungselektrode, teilzylindermantelförmiger Gegenelektrode und gitterförmiger Sensorelektrode vorgeschlagen, von denen ein Differenzsignal erfasst wird. Damit ist es auch möglich in beide Strömungsrichtungen zu messen. Für die Verwendung der Vorrichtung zur Messung der an Verbrennungsmotoren zugeführten Luft ist nachteilig, dass ein elektrisch nichtleitendes Rohr erforderlich ist, dass die Vorrichtung relativ lang ist, dass sie nicht schnell genug messen kann um zeitlich sich sehr rasch verändernde Strömungen richtig zu erfassen, und dass sie bei hohen Strömungsgeschwindigkeiten in Sättigung kommt, also nur mehr sehr ungenaue Werte liefert.

In der Publikation "An ion-drag air mass-flow sensor for automotive applications" von Gerhard W. Malaczynski und Thaddeus Schroeder zur IEEE-Konferenz 1989 wird darauf hingewiesen, dass es sehr vorteilhaft wäre, die in Verbrennungsmotoren angesaugte Luftzylinderselektiv zu messen, dass dabei aber dass Problem bestehe, dass die Strömungsgeschwindigkeit in den einzelnen Ansaugrohren für bisher bekannte Strömungsmessgeräte zu hoch sei. Mit einer Anordnung gemäß der zuvor beschriebenen US 4,953,407 wäre die Aufgabe bewältigbar, wenn der Abstand zwischen Quell- und Sammelelektrode in Anpassung an die maximale zu messende Geschwindigkeit genügend groß gewählt werde. Nachteilig an diesem Vorschlag ist dass die erforderlichen Rohrlängen oft schwer unterzubringen sind, dass Turbulenzen der Strömung nicht erfasst werden können, und vor allem, dass bei guter Messempfindlichkeit bei den höchsten auftretenden Geschwindigkeiten die Messempfindlichkeit bei kleinen Geschwindigkeiten zu gering wird.

Die Druckschrift SU1553831 beschreibt einen Durchflussmengenmesser gemäβ dem Oberbegriff von Anspruch 11 mit einer ersten Elektrode, die auf Massepotential liegt, einer zweiten Elektrode, die auf einer Betriebsspannung liegt und mit einer Messelektrode, wobei die Durchflussmenge, bei konstanter Betriebsspannung, proportional zu der mit dem Strom durch die Messelektrode transportierten Ladungsmenge ist.

Die Druckschrift DE 28 19 506 beschreibt eine Vorrichtung zum Ermitteln des Sedimentierungsbeginns der Feststoffphase einer Feststoff-Flüssigkeitssuspension, die durch eine Leitung fließt.

Die Druckschrift US 5,247,836 betrifft einen Durchflussmengenmesser mit zwei Messelektroden, wobei die Durchflussgeschwindigkeit proportional zu einer gewichteten Differenz zweier Messströme durch die Messelektroden ist.

Die US 3,242,729 beschreibt die Geschwindigkeitsmessung in einem von einem elektrolytisches Fluid durchflossenen Kanal. Drei Elektroden ragen in einem Abstand hintereinander in den Kanal. Zwischen den ersten beiden Elektroden wird mittels einer kleinen Spannung ein Stromfluss aufgebaut. Zwischen der letzten Elektrode und der mittleren Elektrode wird an einem hohen Messwiderstand die Spannung gemessen. Diese liefert eine Aussage über die Geschwindigkeit des Fluids. Die Stromleitungsmechanismen in einem Elektrolyt sind sehr verschieden von jenen in einem an sich nicht leitenden Fluid, wie es Gasströme im Normalfall sind.

Die US 4,056,003 und die US 4,167,114 zeigen Anordnungen, bei denen mindestens drei Gitterelektroden, welche jeweils möglichst den ganzen Strömungsquerschnitt abdecken, in Strömungsrichtung in einem Kanal hintereinander in einem Abstand zueinander angeordnet sind. An der ersten Elektrode wird durch Spannung gegenüber der zweiten Elektrode, und unterstützt durch Radioaktivität, eine Koronaentladung in Gang gehalten.

Die an der dritten Elektrode ankommende elektrische Ladung wird gemessen. Neben dem Nachteil der Radioaktivität treten dabei die gleichen Nachteile auf, wie eingangs zur US 4152935 schon beschrieben.

Ein ähnliches Prinzip, welches auch zu den gleichen Nachteilen führt, wird auch in der US 4,163,389 vorgeschlagen. Eine durch Hochspannung eingebrachte Ladungsmenge wird auf eine konstante Größe pro Zeit geregelt. Flussabwärts ist eine Gitterelektrode angebracht, welche sich über den ganzen Kanalquerschnitt erstreckt. Die dort ankommende Ladungsmenge wird gemessen; sie gibt Aufschluss über die Geschwindigkeit des Fluids. Von der zum Konstantregeln der eingebrachte Ladung erforderliche Spannung wird zusätzlich auf die Dichte des Fluids rückgeschlossen.

Entsprechend der US 4,163,389 werden an einem ersten Elektrodenpaar durch eine Koronaentladung Ladungsträger in das Fluid eingebracht. Über ein davon flussabwärts angeordneten Elektrodenpaar wird durch Anlegen einer Gleichspannung ein elektrischer Strom über den Fluidkanal geleitet. Aus der zeitlichen Phasenverschiebung zwischen einer Taktung der Koronaentladung und einer dadurch verursachten Taktung des Stromes am flussabwärts anliegenden Elektrodenpaar, wird auf die Strömungsgeschwindigkeit des Fluids rückgeschlossen. Die Nachteile sind wiederum im wesentlichen die gleichen wie bei der eingangs erwähnten US 4152935.

Ein ähnliches Funktionsprinzip, welches wiederum zu den gleichen Nachteilen führt, schlägt auch die US 4,186,601 vor. An einem ersten Elektrodenpaar werden durch eine Koronaentladung Ladungsträger in das Fluid eingebracht. Entweder die Spannung an diesem ersten Elektrodenpaar oder an einer flussabwärts in den Strom ragenden Elektrode wird getriggert. An einer noch weiter flussabwärts angeordneten Elektrode wird der zeitliche Verlauf des ankommenden Signals gemessen. Die zeitliche Verschiebung zwischen einer Flanke des Triggersignals und einer dadurch hervorgerufenen Flanke des Signalverlaufes wird zum Rückschluss auf die Geschwindigkeit des Fluids herangezogen.

Es gibt eine Fülle von Publikationen darüber, wie mit Heißdrahtsensoren die in Verbrennungsmotoren angesaugte Luft gemessen werden kann. Entsprechend dem zu Grunde liegenden Messprinzip wird ein von dem zu messenden Fluidstrom umspülter Draht dessen elektrischer Widerstand stark von der Temperatur abhängig ist, über die Temperatur des Gasstromes hinaus erwärmt. Die Abkühlung durch das umspülende Fluid ist ein Maß für Dichte und Geschwindigkeit des Fluids. Wesentliche Nachteile dieser recht gebräuchlichen Methode sind, dass bei negativer Strömungsgeschwindigkeit das gleiche Messergebnis generiert wird wie bei positiver Strömungsrichtung, dass die Messzeit für schnelle Regelungen zu langsam ist, dass der Temperaturbereich in welchem der Sensor einsetzbar ist relativ beschränkt ist, und dass die Empfindlichkeit gegen Zerstörung durch in der Strömung mitschwebende feste Partikel relativ groß ist, und dass auch die Empfindlichkeit gegen Luftfeuchtigkeitseinflüsse beträchtlich ist. Derartige Sensoren werden daher immer nur für Sammel-Ansaugrohre von Verbrennungsmotoren angewendet, und niemals für die Stichrohre, welche zu den einzelnen Zylindern führen. Es gibt eine Fülle von trickreichen Vorschlägen dazu, wie man die Verfälschung des Messergebnisses durch dennoch temporär zurückfließende Fluidströmungen beispielsweise durch örtliche Strömungsglättung oder durch Verarbeitung von zusätzlichen Informationen über den jeweiligen Betriebszustand des Motors durch Interpolation korrigieren kann. Als Beispiel sei die DE 196 33 680 B4 genannt.

Die Erfinder haben sich zur Aufgabe gestellt einen Sensor für die Geschwindigkeitsmessung von Fluidströmungen bereit zu stellen, welcher gegenüber bekannten Sensoren schneller und robuster ist und welcher einen größeren Temperatureinsatzbereich aufweist. Der Sensor soll auch eine Umkehrung der Richtung der Fluidströmung richtig detektieren.

Zur Lösung der Aufgabe wird folgendermaßen vorgegangen:
Eine mit einer ausreichend hohen negativen oder positiven elektrischen Spannung gegen Masse versehene Emitterelektrode ragt in bzw. an den Fluidstrom und emittiert kontinuierlich aus ihrer Oberfläche elektrische Ladungsträger in den Fluidstrom. Die erforderliche, von dieser Emitterelektrode elektrisch isoliert angeordnete Gegenelektrode, kann die elektrisch leitende Wandung des Fluidkanals sein, oder eine sonstige im Fluidkanal, vorzugsweise an seiner Wandung angeordnete Elektrode, oder eine außerhalb des Fluidkanals angeordnete, vorzugsweise als Erdung ausgebildete Elektrode. An einer vorzugsweise flussabwärts am Fluidstrom gelegenen Stelle ist mindestens eine Sensorelektrode angebracht, deren in die angrenzende Querschnittsebene des Fluidstromes projizierte einhüllende Oberfläche gegenüber der Querschnittsfläche des Fluidstromes an dieser Stelle klein ist. Der an der Sensorelektrode ankommende elektrische Strom wird gemessen. Er beträgt einen kleinen Bruchteil des Stromes den die emittierenden Elektrode einspeist. Überraschenderweise folgt der Anteil des Stromes durch die Sensorelektrode am emittierten Strom praktisch verzögerungsfrei einer reproduzierbaren, monoton steigenden und näherungsweise linearen Funktion über der Geschwindigkeit des Fluids.

So kann durch die Messung des Stromes durch die Sensorelektrode unter Berücksichtigung des emittierten Stromes auf die Fluidgeschwindigkeit rückgeschlossen werden und unter zusätzlicher Beachtung der Parameter Druck, Temperatur, Feuchte, Gaszusammensetzung und Querschnittsfläche des Fluidstromes auch auf die pro Zeit durch eine Querschnittsfläche fließende Masse des Fluids.

Kann man jedoch für bestimmte Messanforderungen von konstanten Umgebungsbedingungen ausgehen, so brauchen einzelne Parameter nicht berücksichtigt werden, um über den Sensorstrom auf den Massenstrom schließen zu können. Das kann so weit gehen, dass z.B. bei konstanten Temperaturen, Drücken, Feuchtebedingungen, Gaszusammensetzungen, etc. auf fremde Mess-Parameter überhaupt verzichtet werden kann, um den Massenstrom des Fluids bestimmen zu können.

Wird im Bereich der zu messenden Fluidströmung an mindestens zwei Sensorelektroden gemessen, welche bezüglich der Fluidgeschwindigkeit unterschiedliche Messkennlinien aufweisen, und wird für jede Sensorelektrode für unterschiedliche Werte von Parametern des Fluids wie z.B. Dichte, Feuchtigkeit, Partikelgehalt etc. eine ganze Schar von Messkennlinien aufgenommen, so kann im Betrieb mit Mitteln der automatisierten Datenverarbeitung eine Selbstkalibrierung der Messanordnung bezüglich Fluidgeschwindigkeitsmessung vorgenommen werden. Aus den gespeicherten Kennlinienscharen werden dazu jene Zustandspunkte herausgesucht, bei denen für alle Messpunkte die gleichen Fluidparameter gelten - bzw. ein für die jeweilige Anordnung bekanntes Verhältnis zueinander - und bei denen die jeweiligen Messwerte an den Sensorelektroden die gleiche Geschwindigkeit - bzw. das für die jeweilige Anordnung bekannte Verhältnis - bedeuten. Die unterschiedlichen Messkennlinien können durch unterschiedliche Bauweisen und/oder Anordnungen von Sensorelektroden (Art, Ausführung, Dimension, Abstand, Lage, Material, Isolierkörper etc.) erreicht werden.

Die Erfindung wird an Hand der Zeichnungen anschaulicher:
- Fig. 1:: zeigt den prinzipiellen Messaufbau. Die eingezeichnete Richtung der elektri- schen Ströme ist die technische Stromrichtung.
- Fig. 2:: zeigt ein die Realität etwas vereinfachendes Ersatzschaltbild des Messaufbau- es. Ströme sind wiederum in der technischen Stromrichtung eingezeichnet.
- Fig. 3:: zeigt einen typischen Graph der Abhängigkeit der relativen Größe des Sensor- stromes über der Geschwindigkeit des Fluidstromes.
- Fig. 4:: zeigt eine Ansicht von der Seite eines Fluidstromes her auf den ihn begrenzen- den Kanalwandteil, welcher mit einer Anordnung aus mehreren Elektroden für die erfindungsgemäße Messung versehen ist.
- Fig. 5:: veranschaulicht eine näherungsweise Berechnung, um aus der Messung von zwei in verschiedenen Richtungen liegenden Geschwindigkeitskomponenten ei- nes Fluidstromes auf die Gesamtgeschwindigkeit rückzuschließen.
- Fig. 6:: zeigt in einer Schnittansicht einen Messaufbau an einem durch eine Kanalwand aus elektrisch isolierendem Material begrenzten Fluidstrom. In der dabei skiz- zierten elektrischen Schaltung ist die Messung des Sensorstromes Iₛ durch Messung des Spannungsabfalls an einem Messwiderstand, Rₛ realisiert.
- Fig. 7:: zeigt in einer Schnittansicht eine aus mehreren Elektroden und Isolierung be- stehende Einheit, welche zum erfindungsgemäßen Messen in eine Öffnung in einer einen Fluidstrom begrenzenden Kanalwand eingebaut ist.

Im Folgenden wird die, die Querschnittsfläche eines Fluidstromes begrenzende Wand aus Gründen der Verständlichkeit als "Kanalwand" bezeichnet. Es sei hiermit klargestellt, dass dieser Begriff auch im Fall von solchen Fluidströmen gilt, die nicht um die ganze Querschnittsfläche herum durch eine Wand begrenzt sind, wie das beispielsweise für jenen Fluidstrom zutrifft, welcher an einer Tragfläche eines Flugzeuges relativ dazu strömt.

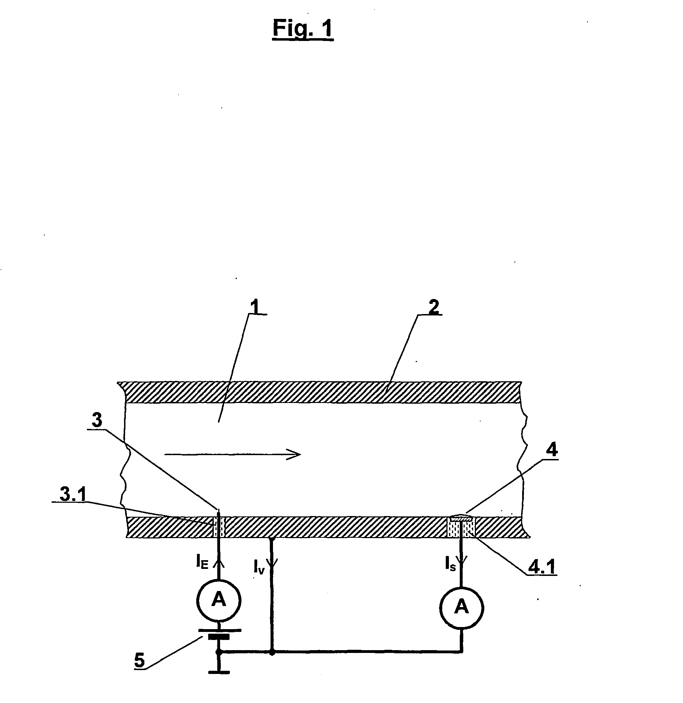

In dem in Fig. 1 dargestellten Beispiel besteht die Kanalwand 2 aus einem elektrisch leitenden Material, welche hier auch als vorzugsweise geerdete Gegenelektrode bzw. Masseelektrode für die Emitterelektrode 3 dient. Sie könnte aber auch aus einem elektrisch isolierenden Material ausgebildet sein. Dann wäre es erforderlich im Innenraum oder im nahen Außenbereich um den Kanal eine geerdete Gegenelektrode zu der emittierenden Elektrode 3 anzubringen.

Die Sensorelektrode 4 ragt kaum in die Querschnittsfläche des Kanals in welchem das Fluid 1 fließt hinein, sondern liegt bündig an der Innenseite der Kanalwand 2 am Fluid 1 an. Auch in ihrer Gesamtfläche ist die Sensorelektrode 4 verhältnismäßig klein. Gegenüber der leitenden Kanalwand 2 ist die Sensorelektrode 4 durch einen als Durchführung ausgebildeten Isolierkörper 4.1 elektrisch isoliert angeordnet.

Die Sensorelektrode braucht nicht zwangsweise an der Kanalwand anzuliegen. Sie kann bei einem umschlossenen Kanalquerschnitt auch bis zur Mitte der Querschnittsfläche in diese hineinragen; bei einem offenen Kanalquerschnitt kann sie auch erheblich von der Kanalwand vorstehen.

Auch die emittierende Elektrode 3 kann einfach und klein, beispielsweise als Nadel ausgeführt werden. Sie führt im normalen Betriebszustand hohe Spannung. Deshalb ist sie durch einen entsprechend durchschlagsfesten Isolierkörper 3.1 von der Kanalwand 2 getrennt. Es ist sehr vorteilhaft, die emittierende Elektrode 3 an ihrem mit dem Fluid 1 in Berührung kommenden Teil mit einer möglichst spitzwinkeligen, scharfen Spitze oder Kante auszubilden, da damit gegenüber einer flacheren Ausführungsform die für die Emission von Elektronen erforderliche hohe Feldstärke einigermaßen einfach erreicht werden kann. Wenn die Spitze der emittierenden Elektrode nicht weit von der leitenden Kanalwand absteht, sondern ihr näher liegt, ist der isolierende Ring zwischen dieser Spitze und der Kanalwand entsprechend breit, typischerweise mehre mm, zu wählen, damit kein Überschlag zwischen emittierender Elektrode und Kanalwand stattfindet. Wie die Sensorelektrode kann auch die Emitterelektrode bei einem umschlossenen Kanalquerschnitt auch bis zur Mitte der Querschnittsfläche in diese hineinragen; bei einem offenen Kanalquerschnitt kann sie erheblich von der Kanalwand vorstehen.

Vor allem für die Anwendung der Messanordnung zum Feststellen der in einen Verbrennungsmotor zugeführten Luftmenge ist es vorteilhaft die emittierende Elektrode 3 an den negativen Pol der Hochspannungsquelle 5 zu legen, und nicht an den positiven Pol. Dadurch repräsentiert nämlich das Messergebnis in höherem Maß die angesaugte, für die Verbrennung entscheidende, Sauerstoffmenge.

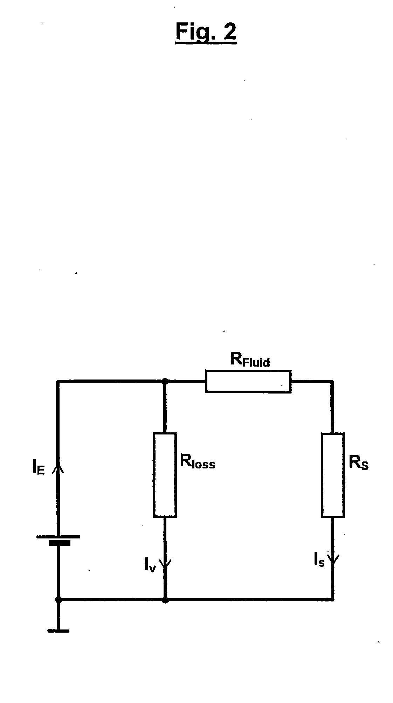

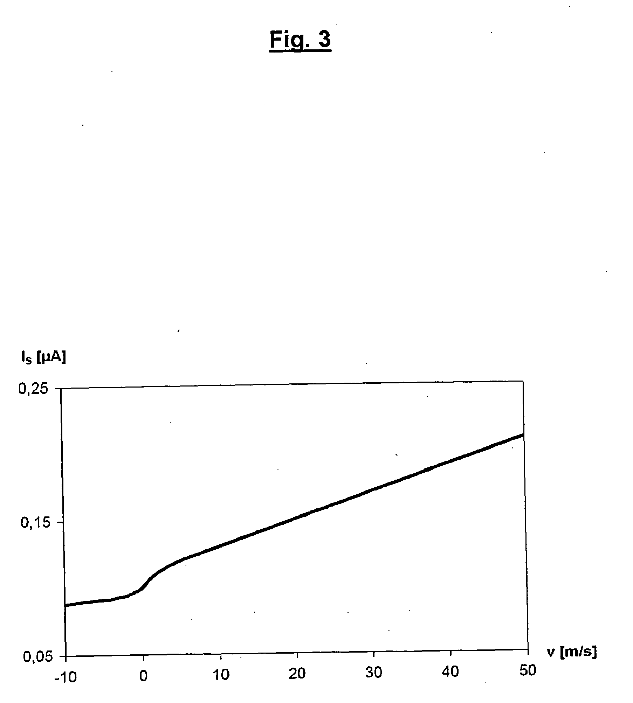

Wenn man die mit der beschriebenen Messanordnung erreichbare, in Fig. 3 gezeigte Abhängigkeit zwischen dem Sensorstrom Iₛ einerseits und der Geschwindigkeit des Fluids 1 andererseits mathematisch näherungsweise beschreiben will, kann man sie sich als durch eine Schaltungsanordnung gemäß Fig. 2 verursacht vorstellen. Dabei wäre anzunehmen, dass der den Stromfluss durch das Fluid repräsentierende Widerstand R_{Fluid} mit der Geschwindigkeit des Fluids annähernd linear abnimmt.

Die bisher gemachten Versuche haben gezeigt, dass die Anordnungen von kleineren negativen Fluidgeschwindigkeiten bis zu mindestens 50 m/sec hohen positiven Fluidgeschwindigkeiten (Positiv entspricht der Pfeilrichtung in Fig. 1) brauchbare reproduzierbare Ergebnisse liefert, und nicht beispielsweise in Sättigung geht. Diese Versuche haben weiters gezeigt, dass die Anlage auch bei Temperaturen um 450° gut verwertbare Messergebnisse liefert. Nicht zuletzt hat sich herausgestellt, dass die Anlage robust gegen Verschmutzung und Feuchtigkeit funktioniert.

Obwohl die physikalischen Vorgänge in Wirklichkeit sicher wesentlich komplexer ablaufen, funktioniert die erfindungsgemäße Messvorrichtung nach außen hin ähnlich einem einfachen ohmschen Stromteiler. Zusammen mit der verbesserten Robustheit, dem größeren Temperaturbereich und der Tatsache, dass keine Elektrodenteile in die Strömung zu ragen brauchen, oder eine große Fläche aufweisen müssen, eröffnen sich damit eine Fülle von bisher unerschlossenen Anwendungsfällen.

Da die Sensorelektrode bezüglich ihrer elektrischen Wirkung auf die Ladungsträger im Fluidstrom weitgehend neutral ist, können in einer Messanordnung problemlos mehrere Sensorelektroden an verschiedenen Rändern der Querschnittsfläche des Fluidstromes und wenn gewollt auch inmitten der Querschnittsfläche verwendet werden, wobei es durchaus möglich ist für eine Mehrzahl von Sensorelektroden nur eine einzige gemeinsame Emitterelektrode vorzusehen.

Da die Messanordnung mit flachen Bauteilen an der Oberfläche des Fluidstromes das Auslangen findet, können die Elektroden kostengünstig als leitende Teile an isolierenden Folien gefertigt werden. Auch die Montage durch Festkleben der Folien an der Begrenzung des zu messenden Fluidstromes wird damit einfach und billig. Die Elektroden der Sensoreinheiten können auch flächenbündig in die Wand des Fluidkanals eingesetzt werden.

Da mit einer einzigen, an sich relativ teuren Spannungsversorgungseinheit gleichzeitig viele Emitterelektroden versorgt werden können, werden damit größere Messanordnungen, bei denen viele Emitter- und Sensorelektroden angewendet werden sehr kostengünstig.

Werden an einer Kanalwand genau eine Emitterelektrode und eine Sensorelektrode angeordnet, so kann damit vor allem die zur Verbindungslinie dieser beiden Elektroden parallele Geschwindigkeitskomponente des Fluidstromes gemessen werden.

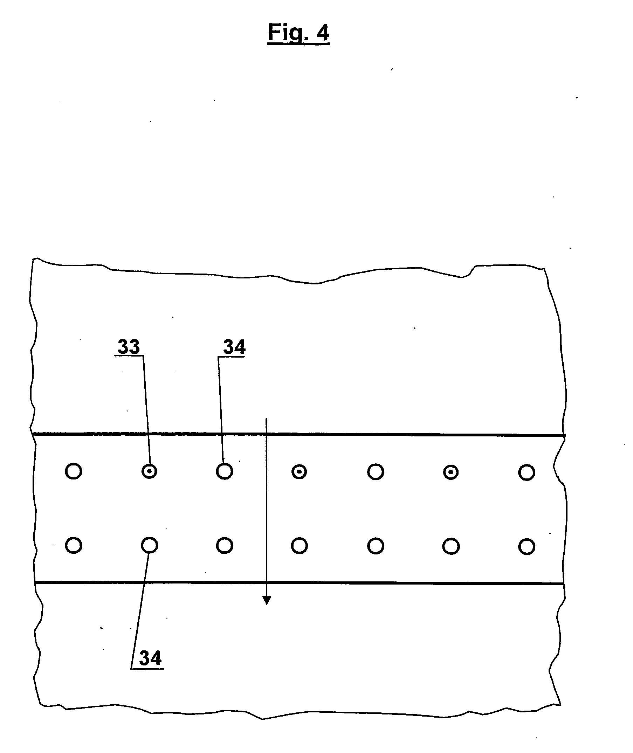

Werden an der Kanalwand um eine Emitterelektrode herum mehrere Sensorelektroden angeordnet, so kann aus den an den einzelnen Sensorelektroden gemessenen Signalen auf Größe und Richtung des gesamten Fluidstromes geschlossen werden, indem aus den einzelnen Signalen auf die einzelnen, von der Emitterelektrode zur jeweiligen Sensorelektrode gerichteten Geschwindigkeitsvektoren geschlossen wird, und aus diesen durch Vektorrechnung auf die gesamte Geschwindigkeit. In Fig. 4 ist dazu beispielhaft veranschaulicht wie mehrere Emitterelektroden 33 und eine noch größere Anzahl von Sensorelektroden 34 auf einem Streifen aus einem isolierenden Material angeordnet und an der Kanalwand befestigt sind.

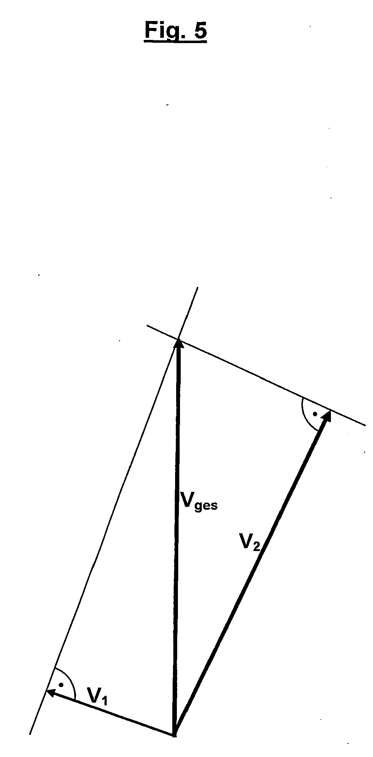

In Fig. 5 ist veranschaulicht, wie die Gesamtgeschwindigkeit eines Fluidstromes im Zweidimensionalen, also über einer Fläche in Größe und Richtung errechnet werden kann, wenn mindestens zwei Einzelkomponenten dieser Geschwindigkeit gemessen werden, welche zueinander nicht parallel stehen. Der Vektor der Gesamtgeschwindigkeit V_{ges} verläuft dann vom gemeinsam angenommenen Anfangspunkt der beiden Komponentenvektoren v₁, v₂ bis zu jenem Punkt, in welchem sich die von den Endpunkten der Komponentenvektoren v₁, v₂ erstreckenden Normalen auf diese Komponentenvektoren schneiden.

Für das Dreidimensionale bedeutet dies, dass der Vektor der Gesamtgeschwindigkeit aus mindestens drei Einzelkomponenten, welche zueinander nicht parallel stehen, grafisch errechnet werden kann, indem jener Vektor gebildet wird, welcher vom gemeinsam angenommenen Anfangspunkt der drei Komponentenvektoren aus bis zu jenem Punkt reicht, in welchem sich all jene drei Ebenen treffen, welche sich jeweils von einem Endpunkt eines Komponentenvektors normal dazu erstrecken.

In der Praxis wird man natürlich diesen geometrischen Zusammenhang in Form einer mathematischen Formel darstellen und diese mittels elektronischer Datenverarbeitung automatisch berechnen.

Besonders einfache Verhältnisse ergeben sich natürlich dann, wenn die zwei oder drei gemessenen Einzelkomponenten normal aufeinander stehen, wenn also die Verbindungslinien zwischen der Emitterelektrode bzw. den Emitterelektroden und den einzelnen Sensorelektroden jeweils normal aufeinander stehen. Die Gesamtgeschwindigkeit über einer Fläche bzw. im Raum ist dann einfach die vektorielle Summe der Einzelkomponenten.

Wenn bei ebenen Strömungen mit mehr als zwei Sensorelektroden oder im räumlichen mit mehr als drei Sensorelektroden gemessen wird, so ist das System für die Berechnung der tatsächlichen Strömungsrichtung überbestimmt. Wenn sich dabei mehrdeutige Ergebnisse ergeben, so kann das als Hinweis auf eine Fehlfunktion von einzelnen Sensorelektroden gedeutet und ausgewertet werden.

Für die eindimensionale Richtungsbestimmung reicht natürlich eine einzige Sensorelektrode aus. Dies ist vor allem dann passend, wenn durch eine schlanke Kanalform ohnedies nur Vor- bzw. Rückwärtsbewegung in Längsrichtung möglich ist.

Es sei ergänzt, dass die Berechnung gemäß Fig. 5 und die daraus folgenden Schlüsse um so besser gelten, je näher die Strömungsrichtung des Fluids mit der Richtung der Verbindungslinie zwischen Emitterelektrode und Sensorelektrode zusammenfällt. Größere Abweichungen ergeben sich, wenn diese beiden Richtungen normal aufeinander liegen. Die an diesem Sensor gemessene Geschwindigkeitskomponente müsste dann gemäß den bisherigen Überlegungen unabhängig vom tatsächlichen Betrag der Fluidgeschwindigkeit immer gleich Null sein. Tatsächlich wird dabei aber ein vom Betrag der Fluidgeschwindigkeit abhängiges Sensorsignal generiert, welches mit steigender Fluidgeschwindigkeit merklich abnimmt.

Eine einfache Möglichkeit die Strömungsrichtung im Zweidimensionalen richtig zu bestimmen, besteht darin, zwei oder mehrere gleichartige Sensorelektroden vorzugsweise entlang eines Kreisbogens um eine gemeinsame Emitterelektrode herum anzuordnen. Die Sensorelektrode welche bezüglich der Emitterelektrode am direktesten in jener Richtung liegt in welcher von der Emitterelektrode aus das Fluid fließt, liefert das stärkste Signal. Im Dreidimensionalen wären drei oder mehr Sensorelektroden dementsprechend vorzugsweise an der Oberfläche einer gedachten Kugelschale anzubringen in deren Zentrum sich die Emitterelektrode befindet.

Besondere Strömungszustände wie Schwingungen und Turbulenzen können mit Hilfe der erfindungsgemäßen Anordnung auch sehr gut erkannt werden.

Schwingungen des Fluidstromes bedeuten an einzelnen Orten zeitlich rasche, zumindest annähernd periodische Geschwindigkeitsänderungen. Sie werden mit Hilfe der erfindungsgemäßen Messvorrichtung einfach erkannt, da diese praktisch verzögerungsfrei arbeitet und daher an den im Bereich von Schwingungen angeordneten Sensorelektroden ein im Zeitverlauf gleichermaßen schwankendes elektrisches Signal zeigt.

Eine Turbulenz des Fluidstromes bedeutet, dass der ansonsten im wesentlichen stromabwärts gerichteten Strömung kreisende Strömungen überlagert sind und dass sich die Geschwindigkeiten an den einzelnen Orten überdies rasch ändern. Turbulenzen werden am "Rauschen", also an raschen, ungeordneten zeitlichen Schwankungen des Messsignals detektiert. Je "sauberer" (= störungsfreier) das Messsignal ist, desto niedriger ist der Turbulenzgrad des Fluids. Mit einer zeitlichen Mittelung beispielsweise in Form einer Tiefpassfilterung des Messsignals kann das Rauschen unterdrückt und somit auf den über eine Dauer durchschnittlichen Fluss rückgeschlossen werden. Die zeitliche Mittelung führt jedoch zu einer Verlangsamung der Messung. Mittels einer Anordnung von mehreren, voneinander beabstandeten Sensorelektroden in bzw. an einer Querschnittsfläche und Mittelung von deren zum gleichen Zeitpunkt aufgenommenen Messergebnissen kann schneller auf den tatsächlichen Gesamtfluss durch diese Querschnittsfläche geschlossen werden. Damit wird es auch bei sehr turbulenten Bedingungen möglich einen Fluidstrom durch eine Querschnittsfläche rascher zu messen als dies mit anderen Methoden derzeit möglich wäre.

Ein wirtschaftlich sehr bedeutender Anwendungsfall ist die Verwendung des erfindungsgemäßen Messprinzips für die zylinderselektive Kontrolle der in einen Verbrennungsmotor zugeführten Luft. Das heißt die Messanordnung kann bei einem mehrzylindrigen Verbrennungsmotor auch in jedes Ansaugrohr extra eingebaut werden, welches genau zu einem einzigen Zylinder führt. Da die Messung auch bei großen Geschwindigkeiten, bei raschen Geschwindigkeitsänderungen und auch bei negativen Geschwindigkeiten richtige Ergebnisse liefert, kann die zugeführte Luftmenge genau erfasst werden. Damit können für jeden Arbeitstakt des Motors und individuell für jeden Zylinder Parameter wie einzuspritzende Treibstoffmenge, Einspritzzeitpunkt und Zündzeitpunkt richtig eingestellt werden, womit der Motor besser in einem optimalen Betriebszustand gehalten werden kann. Nicht nur bei diesem Anwendungsfall empfiehlt es sich die Hochspannungsquelle 5, welche der kostenintensivste Bauteil der Messanordnung ist, für mehrere Messanordnungen, welche sich beispielsweise bis hin zur Klimasteuerung bzw. Klimaregelung erstrecken können, gemeinsam zu verwenden.

Bei diesem Anwendungsfall ist es ein besonderer Vorteil der erfindungsgemäßen Messvorrichtung dass damit Turbulenzen, die in den Drall- und Einlasskanälen entstehen, gut erkannt und damit in ihrer Wirkung auf den Gesamtstrom erforderlichenfalls mittels Summen- oder Differenzmessung ausgeblendet werden können. Diese Eigenschaft kann beim Beladen der Zylinder eines Verbrennungsmotors mit Luft, welche zwecks optimaler Befüllung in bestimmter Weise verwirbelt werden sollte, sehr wertvoll sein. Ein verwandter, wirtschaftlich sehr bedeutender Anwendungsfall ist die Messung des bei Verbrennungsmotoren mit Abgasrückführung der Ansaugluft beigemengten Abgasstromes. Auf Grund der dabei auftretenden Druck-, Temperatur-, und Geschwindigkeitsschwankungen kann auf die Menge des rückgeführten Abgases bisher nur sehr indirekt, ungenau und zeitlich gemittelt rückgeschlossen werden. Mit der Messvorrichtung entsprechend der vorliegenden Erfindung kann das wesentlich verbessert werden. Sie ist ausreichend robust um auch bei einer Anordnung im Rückführungskanal nicht zerstört zu werden, und sie ist derart schnell, dass nicht nur Durchschnittswerte, sondern auch der zeitliche Verlauf von Istwerten der Strömungsgeschwindigkeit erfasst werden können. In Kombination mit Temperaturmessungen kann damit sehr gut der tatsächliche zeitliche Verlauf der Masseströmung erfasst werden.

Wie schon weiter oben angedeutet ist das erfindungsgemäße Messverfahren auch dann anwendbar, wenn das zu messende Fluid nicht in einem Kanal mit geschlossener Querschnittsbegrenzung fließt. Beispielsweise kann die örtliche Strömung an der Oberfläche einer Flugzeugaußenhaut gemessen werden, während das Flugzeug fliegt. Auf diese Weise kann beispielsweise an Hand des gegebenenfalls auftretenden Rauschens des Messsignals eine örtliche Turbulenz erkannt werden, oder es kann auf die tatsächliche Relativgeschwindigkeit des Flugzeuges gegenüber der umgebenden Luft sowohl in Betrag als auch in Richtung geschlossen werden, oder es kann durch Strömungsgeschwindigkeitsmessung an der Oberseite und an der Unterseite einer Tragfläche auf den im betreffenden Flächenbereich wirkenden Auftrieb rückgerechnet werden. Durch das damit erfassbare genauere Wissen über Strömungszustände am Flugzeug können kritische Strömungszustände entweder ganz vermieden oder zumindest schneller erkannt werden, die Steuerung kann schneller erfolgen und auf Grund der besseren Erfassung des wahren Zustandes kann näher an kritische Zustände herangegangen werden.

Die für ein Flugzeug angestellten Überlegungen sind natürlich auf alle aerodynamisch umströmten Flächen verallgemeinerbar.

Wenn die Wand des Fluidkanals aus einem elektrisch isolierenden Material besteht, kann sie natürlich nicht die Gegenelektrode zur emittierenden Elektrode bilden. Man kann dann am Rand des Fluidkanals eine separate Gegenelektrode, welche vorzugsweise geerdet oder mit Masse verbunden ist, anbringen. Überraschenderweise hat sich allerdings gezeigt, dass es auch bei einer Kanalwand aus elektrischisolierendem Material nicht zwingend erforderlich ist, direkt im oder am Querschnitt des Fluidkanals eine Gegenelektrode anzubringen. Die Gegenelektrode kann auch durch eine außerhalb des Fluidkanals angebrachte Masseverbindung gebildet werden. Um unkontrollierbare elektrostatische Aufladungen zu vermeiden und um einigermaßen eindeutige elektrostatische Verhältnisse zu erhalten, sollte man dennoch danach trachten, die Gegenelektrode zumindest definiert im Nahbereich der Begrenzung des Fluidkanals unterzubringen.

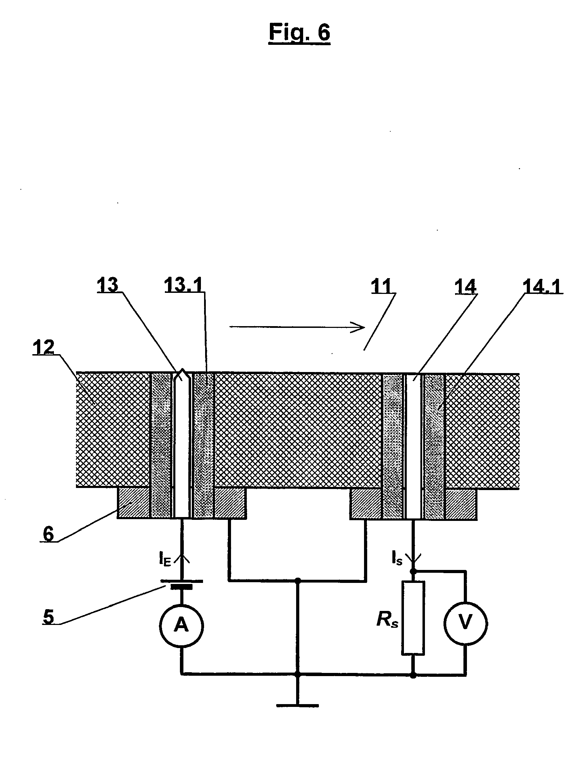

Fig. 6 zeigt, wie die Gegenelektrode 6 durch elektrisch leitfähige Ringe um die Isolierungen 13.1 und 14.1 um die Emitterelektrode 13 und die Sensorelektrode 14 gebildet wird, welche an der Außenseite einer elektrisch isolierenden Kanalwand 12 angeordnet sind. Die Emitterelektrode 13 und die Sensorelektrode 14 durchdringen die elektrisch isolierende Kanalwand 12 an unterschiedlichen, voneinander entfernten Stellen um einen Fluidstrom 11 zu messen.

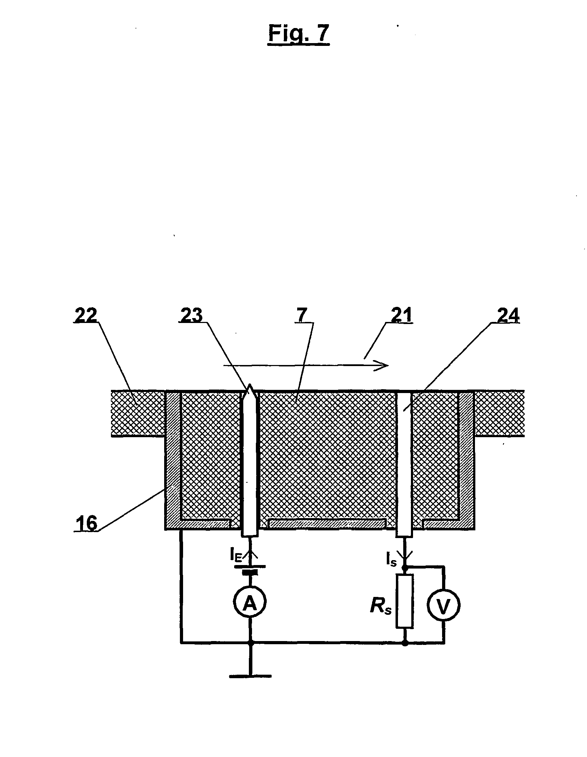

Fig. 7 zeigt eine Baueinheit, welche aus einer als einseitig offenes Gehäuse ausgebildeten, selbstverständlich elektrisch leitenden Gegenelektrode 16 gebildet wird, in welche eine Isolierung 7 eingesetzt ist, in welche wiederum - voneinander und von der Gegenelektrode isoliert angeordnet - eine Sensorelektrode 24 und eine Emitterelektrode 23 eingesetzt sind. Diese Baueinheit ist in eine Öffnung einer Kanalwand 22 eingesetzt um einen Fluidstrom 21 zu messen. Eine Baueinheit dieser Form kann für viele verschiedene Einsatzfälle angewendet werden. Es ist dabei nicht wichtig ob die Kanalwand 22 elektrisch leitend ist oder nicht.

In der praktischen Anwendung wird man die Sensoranordnung mit einer Datenverarbeitungsanlage kombinieren, in welche die Strom- bzw. Spannungsmessergebnisse und

Angaben über Druck und Temperatur des zu messenden Fluids, sowie allfällige weitere Informationen die zum nachträglichen Kalibrieren hilfreich sind, eingelesen werden. In der Datenverarbeitungsanlage sollte gespeichert sein:
- eine bei einem Kalibrierungsdurchlauf bei definierter Temperatur und bei definiertem Druck aufgenommene Messkurve, welcher Sensorstrom Iₛ welche Geschwindigkeit bedeutet.
- eine bei einem oder mehreren Kalibrierungsläufen aufgenommene Regel, entsprechend denen die kalibrierte Strom-Geschwindigkeitskurve durch Verschiebung und erforderlichenfalls Dehnung an die tatsächlich herrschenden Temperatur- und Druckbedingungen angepasst werden kann.
- optional eine Angabe über weitere Messvariablen aus denen hervorgeht, unter welchen im Betrieb auftretenden Bedingungen das zu messende Fluid eine bestimmte bekannte Geschwindigkeit hat, damit die Anlage laufend nachkalibriert werden kann.
- optional Regeln entsprechend welchen aus der Veränderung der Messdaten an einzelnen Sensorelektroden sofern diese im Widerspruch zu den Messdaten an anderen Sensorelektroden stehen, eine Neukalibrierung an einzelnen Sensorelektroden vorgenommen wird.
- Berücksichtigung des Emitterstromes um von diesem auf Änderungen in der Zusammensetzung des Fluids oder die Umgebung rückzuschließen. Solche Änderungen können beispielsweise Gaszusammensetzung, Feuchtigkeit, Partikelgehalt, Gehalt an freien Radikalen, Kurzschluss oder Ablagerungen betreffen.

Die Datenverarbeitungsanlage kann dann beispielsweise zum Erbringen folgender Leistungen programmiert werden:
- Information über die momentane Geschwindigkeit des betrachteten Fluids an einzelnen Sensorelektroden.
- Information über gemittelte Geschwindigkeiten
- Information über fließende Menge des Fluids (g/sec)
- Information über aufsummierte Menge des geflossenen Fluids
- Nachjustierung der Kalibrierung entsprechend Druck/Temperatur oder an Hand von mittels Referenzpunkten festgestellter Abweichung (z.B. in Folge Verschmutzung).
- Auslösen von Schaltvorgängen, wie beispielsweise kurzzeitiges Erhöhen der Spannung der Emitterelektrode, eventuell bei gleichzeitigem Abschalten der Sensorelektrode, um Verschmutzung an der Emitterelektrode wegzubrennen.
- Information über Vorhandensein und Stärke von Schwingungen
- Information über Vorhandensein und Stärke von Turbulenzen
- Erkennung des Schiebewinkels z.B. bei Fluggeräten
- Erkennung des Anstellwinkels z.B. bei Fluggeräten
- Erkennung der relativen Geschwindigkeit z.B. bei Fluggeräten
- Erkennung von Vor- oder Rückströmung
- Erkennung der eindimensionalen Fluidrichtung
- Erkennung der zweidimensionalen Fluidrichtung
- Erkennung der dreidimensionalen Fluidrichtung
- Optional Information über Summen-Einflussparameter (z.B. Druck & Temperatur)
- usw.

Als Faustregeln für die Dimensionierung wurden festgestellt:
- Die Fläche einer flächenbündigen Sensorelektrode 4 sollte in mm² mindestens 0,5 betragen, und maximal die maximale zu messende Fluidgeschwindigkeit in m/s durch 2,5.
- Die Sensorfläche einer vorstehenden Sensorelektrode 4 in mm² sollte zwischen 1 und dem Zahlenwert der maximalen zu messende Fluidgeschwindigkeit in m/s liegen.
- Der Strom durch die Emitterelektrode (3) sollte im Bereich von eins bis hundert µA liegen.
- Der optimale Abstand zwischen Emitterelektroden und Sensorelektroden hängt von der eingebrachten Hochspannung und der zu messenden Fluidgeschwindigkeit ab. Er liegt typischerweise im Bereich von ca. 8 bis ca. 100 mm.
- Der Messwiderstand Rₛ am Sensor liegt typischerweise bei 3 bis 30 Megaohm

Vor allem dann, wenn die hochspannungsführende emittierende Elektrode 3 flächenbündig mit der umgebenden Gegenelektrode liegt, kann es Vorteile bringen, diese Gegenelektrode nicht direkt mit Masse zu verbinden, sondern über einen elektrischen Widerstand. Dieser Widerstand sollte kleiner sein als der Messwiderstand Rₛ an der Sensorelektrode. Mit Hilfe dieses Widerstandes kann der abfließende Strom gut gemessen werden, und es können damit Erkenntnisse gewonnen werden, ob - im Prinzip unerwünschte - Kriechströme von der emittierenden Elektrode 3 vorliegen. Beispielsweise kann damit Vereisung der Emitterelektrode erkannt werden. Bei einem allfälligen Überschlag wird der Strom durch einen derartigen Widerstand begrenzt. Der Widerstand sollte kleiner sein, als der Messwiderstand Rs weil er damit im Fall eines Überschlages einen größeren Anteil der Stromleitung übernimmt, und somit die Messanordnung schützt.

Es ist nicht zwangsläufig erforderlich den Emitter mit Gleichspannung bzw. Gleichstrom zu betreiben. Versuche haben gezeigt, dass auch ein Betrieb mit Wechselspannung bzw. Wechselstrom möglich ist.

## Patentansprüche

1. Verfahren zur Messung der Strömungsgeschwindigkeit eines Fluidstroms mit den folgenden Schritten:
- Emittieren von elektrischen Ladungsträgern aus einer Emitterelektrode in den Fluidstrom aus einer unter hoher Spannung stehenden und den Fluidstrom an einer ersten Stelle berührenden Emitterelektrode (3), sodass ein Emitterstrom (I_{E}) durch die Emitterelektrode (3) fließt;
- Zeitkontinuierliches Einfangen eines ersten Teils der emittierten Ladungsträger durch eine den Fluidstrom an einer zweiten Stelle berührenden Sensorelektrode (4), sodass ein Sensorstrom (I_{S}) durch die Sensorelektrode (4) über eine Strommesseinrichtung (A; R_{S}, V) zu einem Massepotential hin abfließt, wobei ein zweiter Teil der emittierten Ladungsträger über eine von der Emitterelektrode isoliert angeordnete Gegenelektrode (2) zu einem Massepotential hin abfließt, und wobei eine in eine an die Sensorelektrode (4) angrenzende Querschnittsebene des Fluidstroms projizierte Oberfläche der Sensorelektrode (4) klein gegenüber der Querschnittsfläche des Fluidstromes an der zweiten Stelle ist, **gekennzeichnet durch** die Schritte :
- Messen des Sensorstromes (I_{S}) und des Emitterstromes (I_{E});
- Berechnen der Strömungsgeschwindigkeit des Fluidstromes aus dem Messwert für den Sensorstrom (I_{S}) unter Berücksichtigung des Messwerts für den Emitterstrom (I_{E}).

2. Verfahren nach Anspruch 1, bei dem der Fluidstrom in einem Strömungskanal fließt und eine Kanalwand (2) des Strömungskanals als Gegenelektrode verwendet wird.

3. Verfahren nach Anspruch 1 oder 2, bei dem mehrere Sensorelektroden (4, 14, 24, 34) an verschiedenen Stellen des Fluidstromes angeordnet sind.

4. Verfahren nach Anspruch 2 oder 3 mit den folgenden zusätzlichen Schritten:
- Messen von Druck und/oder Temperatur und/oder Feuchtigkeit des Fluidstroms;
- Berechnen der pro Zeiteinheit durch die Querschnittsfläche des Fluidstroms fließende Massemenge aus der Strömungsgeschwindigkeit.

5. Verfahren nach Anspruch 3, bei dem eine Kalibrierung mit den folgenden Schritten durchgeführt wird:
- Messen von Sensorströmen (I_{S}) bei verschiedenen bekannten Strömungsgeschwindigkeiten, um eine kalibrierte Messkurve zu erhalten;
- Verwenden der Messkurve im anschließenden Schritt des Berechnens der Strömungsgeschwindigkeit.

6. Verfahren nach Anspruch 3, bei dem eine Kalibrierung mit den folgenden Schritten durchgeführt wird:
- Messen der Sensorströme (I_{S}) mindestens zweier Sensorelektroden (4, 14, 24, 34) mit für das betrachtete Fluid bekannten und bezüglich der Strömungsgeschwindigkeit unterschiedlichen Kennlinien;
- Ermitteln jener Kennlinienpunkte in den unterschiedlichen Kennlinien der mindestens zwei Sensorelektroden, in denen sowohl die gemessenen Strömungsgeschwindigkeiten als auch weitere Parameter des Fluids übereinstimmen.

7. Verfahren nach einem der Ansprüche 3 bis 6, mit folgenden weiteren Schritten:
- Messen der Sensorströme (I_{S}) an den Sensorelektroden (34);
- Berechnen vektorieller Strömungsgeschwindigkeitskomponenten (v₁, v₂, ...), die jeweils an den Stellen der Sensorelektroden aus Richtung der zugehörigen Emitterelektrode auftreten, aus den korrespondierenden Sensorströmen (I_{S}) ;
- Berechnen von Betrag und Richtung des Strömungsgeschwindigkeitsvektors aus den Strömungsgeschwindigkeitskomponenten.

8. Verfahren nach einem der vorhergehenden Ansprüche bei dem der Emitterstrom (I_{E}) durch die Emitterelektrode (3, 13, 23, 33) im Bereich von eins bis hundert Mikroampere liegt.

9. Verfahren nach einem der vorhergehenden Ansprüche, bei dem zeitliche Schwingungen der Sensorströmen ausgewertet werden um Schwingungen in der Strömungsgeschwindigkeit zu ermitteln.

10. Verfahren nach einem der vorhergehenden Ansprüche, bei dem der Rauschanteil der gemessenen Sensorströme ausgewertet wird, um Turbulenzen in der Strömung zu erkennen.

11. Vorrichtung zur Messung der Strömungsgeschwindigkeit eines Fluidstroms mit den folgenden Merkmalen:
- eine Hochspannungsquelle (5);
- eine Emitterelektrode (3), die mit der Hochspannungsquelle (5) verbunden und derart den Fluidstrom berührend angeordnet ist, sodass elektrische Ladungsträger in den Fluidstrom zu emittiert werden, und ein Emitterstrom (I_{E}) durch die Emitterelektrode (3) fließt;
- eine Sensorelektrode (4), die derart an einer zweiten Stelle des Fluidstroms angeordnet ist, sodass zeitkontinuierlich ein erster Teil der emittierten Ladungsträger durch die Sensorelektrode (4) aufgefangen wird und ein Sensorstrom (I_{S}) durch die Sensorelektrode (4) über eine Strommesseinrichtung (A; Rₛ, V) zu einem Massepotiential hin abfließt, wobei eine in eine an die Sensorelektrode (4) angrenzende Querschnittsebene des Fluidstroms projizierte Oberfläche der Sensorelektrode (4) klein gegenüber der Querschnittsfläche des Fluidstromes an der zweiten Stelle ist;
- einer von der Emitterelektrode isoliert angeordnete Gegenelektrode, die derart ausgestaltet ist, dass ein zweiter Teil der emittierten Ladungsträger über die Gegenelektrode zu einem Massepotential hin abfließt, **gekennzeichnet durch**
- Mittel zum Messen des Sensorstromes (I_{S}) und des Emitterstromes (I_{E}), die dazu ausgebildet sind, entsprechende Messwerte bereitzustellen;
- Mittel zum Berechnen der Strömungsgeschwindigkeit des Fluidstromes, die dazu ausgebildet sind, aus dem Messwert für den Sensorstrom (I_{S}) unter Berücksichtigung des Messwerts für den den Emitterstrom (I_{E}) die Strömungsgeschwindigkeit zu berechen.

12. Vorrichtung nach Anspruch 11, die einen Strömungskanal aufweist, in dem der Fluidstrom fließt, wobei eine Kanalwand (2) des Strömungskanals die Gegenelektrode ist.

13. Vorrichtung nach Anspruch 11 oder 12, die einen Strömungskanal aufweist, in dem der Fluidstrom fließt, wobei mehrere Sensorelektroden (4, 34) an verschiedenen Stellen des Strömungskanals angeordnet sind.

14. Vorrichtung nach einem der Ansprüche 11 bis 13, die zusätzlich eine elektrisch isolierende Trägerfolie aufweist, auf der mindestens eine Emitterelektrode und mindestens eine Sensorelektrode gemeinsam angeordnet sind.

15. Vorrichtung nach Anspruch 14, die einen den Fluidstrom begrenzenden Strömungskanal mit einer Kanalwand aufweist, an der die Trägerfolie festgeklebt ist.

16. Vorrichtung nach einem der Ansprüche 11 bis 13, die einen den Fluidstrom begrenzenden Strömungskanal mit einer Kanalwand aufweist, in die die Sensor- bzw. Emitterelektroden flächenbündig eingesetzt sind.

17. Verwendung der Vorrichtung nach einem der Ansprüche 11 bis 16 zur Messung der Strömungsgeschwindigkeit der durch einen Abgaskanal eines Verbrennungsraums eines Verbrennungsmotors rückgeführten Gase.

## Claims

1. A method for measuring the flow velocity of a fluid flow, comprising the steps of:
- emitting electric charge carriers from an emitter electrode into the fluid flow from an emitter electrode (3) being under high voltage and contacting the fluid flow at a first position, so that an emitter current (I_{E}) flows through the emitter electrode (3);
- time-continuously collecting a first portion of the emitted charge carriers by a sensor electrode (4) contacting the fluid flow at a second position, so that a sensor current (Iₛ) sinks through the sensor electrode (4) via a current measuring device (A; R_{S}, V) towards a ground potential, wherein a second portion of the emitted charge carriers sinks via a counter electrode (2), which is arranged isolated from the emitter electrode, towards a ground potential, and wherein a surface of the sensor electrode (4) projected in a cross sectional plane of the fluid flow abutting the sensor electrode (4) is small compared with the cross sectional area of the fluid flow at the second position, **characterised by** the steps of:
- measuring the sensor current (Iₛ) and the emitter current (I_{E});
- calculating the flow velocity of the fluid flow from the measured value of the sensor current (I_{S}) considering the measured value of the emitter current (I_{E}).

2. The method according to claim 1, wherein the fluid flow is flowing within a flow channel and wherein a channel wall (2) of the flow channel is used as a counter electrode.

3. The method according to claim 1 or 2, wherein multiple sensor electrodes (4, 14, 24, 34) are arranged at different positions of the fluid flow.

4. The method according to claim 2 or 3, comprising the additional steps of:
- measuring pressure and/or temperature and/or humidity of the fluid flow;
- calculating from the flow velocity the mass amount flowing through the cross sectional area of the fluid flow per time unit.

5. The method according to claim 3, wherein a calibration is performed with the following steps:
- measuring sensor currents (Iₛ) at different known flow velocities to gain a calibrated measured curve;
- using the measured curve in the subsequent step of calculating the flow velocity.

6. The method according to claim 3, wherein a calibration is performed with the following steps of:
- measuring the sensor currents (I_{S}) of at least two sensor electrodes (4, 14, 24, 34) having characteristic curves known for the fluid considered and different with respect to the flow velocity;
- determining those characteristic curve points in the different characteristic curves of the at least two sensor electrodes, where both the measured flow velocities and further parameters of the fluid match.

7. The method according to one of claims 3 to 6, comprising the following further steps:
- measuring the sensor currents (I_{S}) at the sensor electrodes (34);
- calculating, from the corresponding sensor currents (I_{S}), vectorial flow velocity components (v₁, v₂, ...) each occuring at the positions of the sensor electrodes from the direction of the corresponding emitter electrode;
- calculating the absolute value and the direction of the flow velocity vector from the flow velocity components.

8. The method according to one of the preceding claims,
wherein the emitter current (I_{E})
through the emitter electrode (3, 13, 23, 33) is within the range from one to hundred microamperes.

9. The method according to one of the preceding claims,
wherein time oscillations of the sensor currents are evaluated to determine oscillations in the fluid velocity.

10. The method according to one of the preceding claims,
wherein the noise component of the measured sensor currents is evaluated for recognising turbulences within the flow.

11. An apparatus for measuring the flow velocity of a fluid flow, comprising:
- a high voltage source (5);
- an emitter electrode (3) connected to the high voltage source (5) and arranged contacting the fluid flow such that electric charge carriers are emitted into the fluid flow, and an emitter current (I_{E}) flows through the emitter electrode (3);
- a sensor electrode (4) arranged at a second position of the fluid flow such that a first portion of the emitted charge carriers is time-continuously collected by the sensor electrode (4) and a sensor current (Iₛ) is sinked through the sensor electrode (4) via a current measuring device (A, Rₛ, V) towards a ground potential, wherein a surface of the sensor electrode (4) projected in a cross sectional plane of the fluid flow abutting the sensor electrode (4) is small compared with the cross sectional area of the fluid flow at the second position;
- a counter electrode arranged isolated from the emitter electrode, which is formed such, that a second portion of the emitted charge carriers sinks via the counter electrode towards a ground potential, **characterized by**
- means for measuring the sensor current (Iₛ) and the emitter current (I_{E}), which are designed for providing corresponding measured values;
- means for calculating the flow velocity of the fluid flow, which are designed for calculating the flow velocity from the measured value of the sensor current (I_{S}) considering the measured value of the emitter current (I_{E}).

12. The apparatus according to claim 11, comprising a flow channel the fluid flow is flowing within, wherein a channel wall (2) of the flow channel ist the counter electrode.

13. The apparatus according to claim 11 or 12, comprising a flow channel the fluid flow is flowing within, wherein multiple sensor electrodes (4, 34) are arranged at different positions of the flow channel.

14. The apparatus according to one of claims 11 to 13, additionally comprising an electrically isolating carrier foil, onto which at least one emitter electrode and at least one sensor electrode are arranged together.

15. The apparatus according to claim 14, comprising a flow channel confining the fluid flow and comprising a channel wall, to which the carrier foil is stuck.

16. The apparatus according to one of claims 11 to 13, comprising a flow channel confining the fluid flow and comprising a channel wall, into which the sensor and emitter electrodes are inserted flush, respectively.

17. Use of the apparatus according to one of claims 11 to 17 for measuring flow velocity of the gases, which are recirculated through an exhaust channel of a combustion chamber of a combustion engine.

## Revendications

1. Procédé de mesure de la vitesse de courant d'une veine de fluide comprenant les étapes suivantes :
- émission de porteurs de charges électriques par une électrode d'émetteur dans la veine de fluide à partir d'une électrode d'émetteur (3) mise à haute tension et au contact de la veine de fluide à un premier endroit de façon que le courant électrique d'émetteur (I_{E}) traverse l'électrode d'émetteur (3),
- réception en continu dans le temps d'une première partie des porteurs de charges émis à l'aide d'une électrode de capteur (4) touchant la veine de fluide en un second endroit pour que le courant électrique de capteur (Is) traverse l'électrode de capteur (4) à travers une installation de mesure d'intensité (A ; Rs ; V) pour rejoindre le potentiel de masse,
* une seconde partie des porteurs de charges émis passant par une contre-électrode (2) installée de manière isolée par rapport à l'électrode d'émetteur vers un potentiel de masse, et
* la surface supérieure de l'électrode de capteur (4) projetée dans un plan de section de la veine de fluide adjacent à l'électrode de capteur (4) est petite par rapport à la surface de la section de la veine de fluide au second point,
procédé **caractérisé par** les étapes suivantes :
- mesurer l'intensité du courant électrique de capteur (Is) et du courant électrique d'émetteur (I_{E}),
- calculer la vitesse d'écoulement de la veine de fluide à partir de la valeur de mesure de l'intensité du courant électrique de capteur (Is) en tenant compte de la valeur de mesure du courant électrique d'émetteur (I_{E}).

2. Procédé selon la revendication 1,
**caractérisé en ce que**
la veine de fluide passe dans un canal d'écoulement et une paroi (2) du canal d'écoulement fonctionne comme contre-électrode.

3. Procédé selon la revendication 1 ou 2,
**caractérisé par**
plusieurs électrodes de capteur (4, 14, 24, 34) prévues en différents endroits de la veine de fluide.

4. Procédé selon la revendication 2 ou 3 comprenant les étapes suivantes :
- mesurer la pression et/ou la température et/ou l'humidité de la veine de fluide,
- calculer la masse de la veine de fluide traversant par unité de temps, la surface de la section à partir de la vitesse de courant de fluide.

5. Procédé selon la revendication 3,
**caractérisé en ce qu'**
on effectue un calibrage avec les étapes suivantes :
- mesurer les intensités du courant électrique de capteur (I_{S}) pour différentes vitesses de courant de fluide, connues, pour obtenir une courbe de mesure calibrée,
- utiliser la courbe de mesure dans l'étape suivante du calcul de la vitesse de courant de fluide.

6. Procédé selon la revendication 3 selon lequel on effectue un calibrage avec les étapes suivantes :
- mesurer les intensités du courant électrique de capteur (I_{S}) d'au moins deux électrodes de capteur (4, 14, 24, 34) avec des courbes caractéristiques connues et différentes pour la vitesse de courant pour le fluide considéré,
- déterminer les points des différentes courbes caractéristiques d'au moins deux électrodes de capteur dans lesquelles concordent à la fois les vitesses de courant de fluide mesurées et d'autres paramètres du fluide.

7. Procédé selon l'une des revendications 3 à 6 comprenant les autres étapes suivantes :
- mesurer les intensités des courants électriques de capteur (Is) sur les électrodes de capteur (34),
- calculer les composantes vectorielles de la vitesse de courant de fluide (V₁, V₂, ...) qui apparaissent aux endroits des électrodes de capteur dans la direction de l'électrode d'émetteur correspondante, à partir des intensités de courant électrique de capteur (Is) correspondantes,
- calculer l'amplitude et la direction du vecteur de vitesse de courant de fluide à partir des composantes de vitesse de courant de fluide.

8. Procédé selon l'une des revendications précédentes selon lequel l'intensité du courant électrique d'émetteur (I_{E}) à travers l'électrode d'émetteur (3, 13, 23, 33) se situe dans une plage comprise entre un jusqu'à une centaine de micro-ampères.

9. Procédé selon l'une des revendications précédentes,
**caractérisé en ce qu'**
on exploite les variations dans le temps des intensités de courant électrique de capteur pour déterminer les oscillations de la vitesse de courant de fluide.

10. Procédé selon l'une des revendications précédentes,
**caractérisé en ce qu'**
on exploite la partie de bruit des intensités de courant électrique de capteur, mesurées, pour déceler les turbulences dans le courant de fluide.

11. Dispositif de mesure de la vitesse de courant d'une veine de fluide comprenant les caractéristiques suivantes :
- une source de haute tension (5),
- une électrode d'émetteur (3) reliée à la source de haute tension (5) et touchant la veine de fluide pour émettre des porteurs de charges électriques dans la veine de fluide, un courant électrique d'émetteur (I_{E}) traversant l'électrode d'émetteur (3),
- une électrode de capteur (4) installée en un second point de la veine de fluide pour recevoir de manière continue dans le temps une première partie des porteurs de charges d'émetteur par l'électrode de capteur (4) et un courant électrique de capteur (Is) traversant l'électrode de capteur (4) à travers une installation de mesure d'intensité de courant électrique (A ; Rs, V) vers un potentiel de masse,
* la surface supérieure de l'électrode de capteur projetée sur un plan de section de la veine de fluide, adjacent à l'électrode de capteur (4), est plus petite que la surface de la section de la veine de fluide au second point,
- une contre-électrode disposée de manière isolée par rapport à l'électrode d'émetteur est conçue pour qu'une seconde partie des porteurs de charges d'émetteur traverse la contre-électrode pour arriver dans un potentiel de masse,
dispositif **caractérisé par**
- des moyens pour mesurer l'intensité du courant électrique de capteur (Is) et du courant électrique d'émetteur (I_{E}), ces moyens étant réalisés pour fournir des valeurs de mesure correspondantes,
- des moyens pour calculer la vitesse d'écoulement de la veine de fluide, ces moyens étant réalisés pour calculer à partir des valeurs de mesure de l'intensité du courant électrique de capteur (Is), la vitesse de courant de fluide en tenant compte de la valeur de mesure de l'intensité du courant électrique d'émetteur (I_{E}).

12. Dispositif selon la revendication 11,
**caractérisé par**
un canal d'écoulement dans lequel passe la veine de fluide,
* une paroi (2) du canal d'écoulement étant la contre-électrode.

13. Dispositif selon la revendication 11 ou 12,
**caractérisé en ce qu'**
il comporte un canal d'écoulement traversé par la veine de fluide et plusieurs électrodes de capteur (4, 34) sont installées en différents points du canal d'écoulement.

14. Dispositif selon l'une des revendications 11 à 13,
**caractérisé en ce qu'**
il comporte en outre un film de support isolant électrique muni d'au moins une électrode d'émetteur et d'au moins une électrode de capteur, installées en commun.

15. Dispositif selon la revendication 14,
**caractérisé par**
un canal d'écoulement délimitant la veine de fluide et ayant une paroi sur laquelle le film de support est collé solidairement.

16. Dispositif selon l'une des revendications 11 à 13,
**caractérisé en ce que**
le canal d'écoulement délimitant la veine de fluide comporte une paroi de canal munie à fleur de la surface, des électrodes de capteur et d'émetteur.

17. Application du dispositif selon l'une des revendications 11 à 16 pour mesurer la vitesse de courant de fluide de gaz de recyclage d'un moteur à combustion interne traversant le canal des gaz d'échappement pour revenir dans une chambre de combustion.
